# EUROPEAN PATENT SPECIFICATION

(11) **EP 2 856 257 B1**
(45) Date of publication and mention of the grant of the patent: **28.08.2019**
(21) Application number: 12878109.3
(22) Date of filing: 28.05.2012
(51) Int. Cl.: G03F 3/06, H04N 1/60

(54) **IMAGE PROCESSING, PRINTING, AND PRINTED ARTICLE**
BILDVERARBEITUNG, DRUCKEN UND DRUCKARTIKEL
TRAITEMENT D'IMAGE, IMPRESSION ET ARTICLE IMPRIMÉ

(43) Date of publication of application: 08.04.2015
(73) Proprietor: HP Scitex Ltd, 42506 Netanya (IL)
(72) Inventor: DAVIDSON, Alex, 42505 Netanya (IL)
(74) Representative: Stöckeler, Ferdinand
(86) International application number: PCT/IL2012/000207
(87) International publication number: WO 2013/179276

(56) References cited:
- EP-A2- 2 104 332
- JP-A- 2004 146 914
- US-A1- 2004 027 416
- US-A1- 2007 139 671
- US-A1- 2010 182 659
- US-A1- 2010 182 659
- US-A1- 2011 298 850
- US-B2- 7 054 031
- US-B2- 8 114 486

## Description

### BACKGROUND

Modern colour printing systems typically use at least four different coloured inks and are able to reproduce colours from a wide colour gamut. Typical four-colour printing systems use cyan (C), magenta (M), yellow (Y), and black (K) inks, and are able to reproduce colours in the CMYK colour gamut.

However, despite the wide colour gamut reproducible by modern printing system some colours are not able to be produced accurately. Pure red, For example, is out of gamut of the CMYK colour gamut. Furthermore, many commonly used colours, such as Pantone colours, are not reproducible using CMYK print processes.

Typically, when a printing system is to be used to reproduce a colour outside of the standard colour gamut of the printing system additional spot colour inks can be installed. For example, if an image to be printed has a portion of the image, such as a company logo, that is to be printed with a specific colour (such as a Pantone colour), a spot colour ink may be used to when printing that portion.

JP 2004 146914 A discloses a method for reducing ink consumption. The ink consumption for each of several papers having different colors is calculated based on image data and the colored paper with the smallest ink consumption is selected for printing the image data.

US 2004/0027416 A1 discloses a method for optimizing colored images, which determines, for each pixel, whether and with what color density, a white underprint can be applied to a corresponding pixel, using an algorithm base on overall color density.

The invention provides a method of processing an image to be printed according to claim 1 and an image processor according to claim 6.

### BRIEF DESCRIPTION

Examples, or embodiments of the invention will now be described, by way of non-limiting example only, with reference to the accompanying drawings, in which:
Figure 1 is an illustration of image to printed;
Figure 2 is a simplified block diagram of an image processor according to one example;
Figure 3 is flow diagram outlining an example method of operating the image processor according to a comparative example;
Figure 4 is an illustration of an article printed in accordance with printer control data generated by the image processor according to one example;
Figure 5 is flow diagram outlining an example method of operating the image processor according to one example;
Figure 6 is an illustration showing a cross-section of an article printed in accordance with printer control data generated by the image processor according to one example;
Figure 7 is flow diagram outlining an example method of operating the image processor according to one example;
Figure 8 is a simplified block diagram of a printing system according to one example; and
Figure 9 is flow diagram outlining an example method of operating the image processor according to one example.

### DETAILED DESCRIPTION

Although spot colour inks may be used when printing outside a printer system's standard colour gamut, using spot colour inks is not without problems.

In short or low-volume printing runs, for instance, it may not be economic or convenient to use spot colour inks. For example, if different print runs require different spot colours this means that a printing system operator would have to change the spot colour ink for each different print run. This may, in addition to adding a new spot colour ink supply, require purging or cleaning of part of the printing system ink supply system or print engine to remove all traces of a previously installed spot colour ink.

Furthermore, even though it may be possible to install multiple spot colour inks in some printing systems it is difficult to know in advance which spot colours inks should be installed, since each print run may require a different spot colour ink.

Examples of the present invention, as described herein, however provide a method and system for generating printed matter having specific spot colours, without resorting to use of spot colour inks.

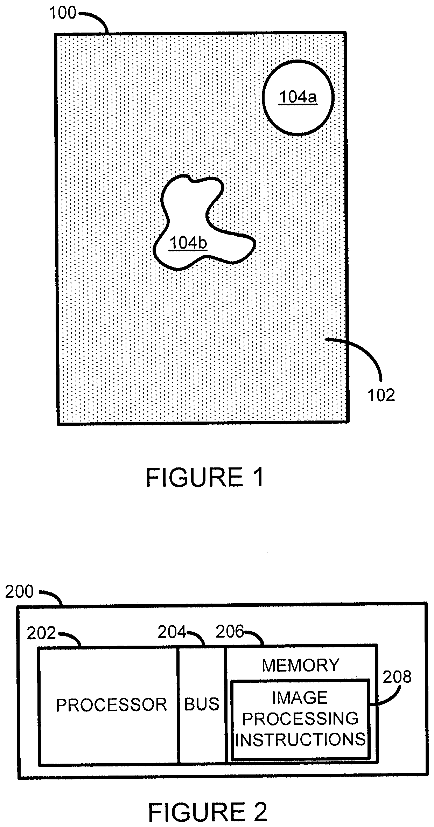

Referring now to Figure 1 there is shown an illustration of an image to be printed 100. The image to be printed includes general image content 102, such as a photograph, a graphical illustration, text, or the like. The image 100 additionally includes one or multiple areas 104 of image content that are defined to have a specific spot colour.

One example of a spot colour is a colour chosen from the Pantone Matching System set of colours, commonly referred to as Pantone colours. Spot colours from other colour spaces may also be used.

A spot colour may be assigned to one or multiple areas 104 of the image 100 using, for example, a suitable image processing application, such as a prepress application.

The image 100, along with any spot colour information, may be represented by image data stored in a suitable electronic file format on a storage media or within a suitable memory.

To avoid having to use spot colour inks to print an image having a spot colour the present examples make use of coloured substrates or media on which the image is to be printed, as will be described in more detail below. Changing substrates on a printing system is generally much more straightforward and convenient than changing ink supplies, and many printing systems include multiple substrate sources enabling a printing system to automatically chose an appropriate substrate from available substrates.

Turing now to Figure 2, there is shown an image processor 200 according to an example. The image processor 200 comprises a processor 202. The processor 202 may be, for example, a computer processor, a microcontroller, or any suitable processing element. The processor 202 is coupled to a communication bus 204 to which is coupled a memory 206. The memory 206 stores image processing instructions 208 that when executed by the processor 202 perform image processing operations as described below.

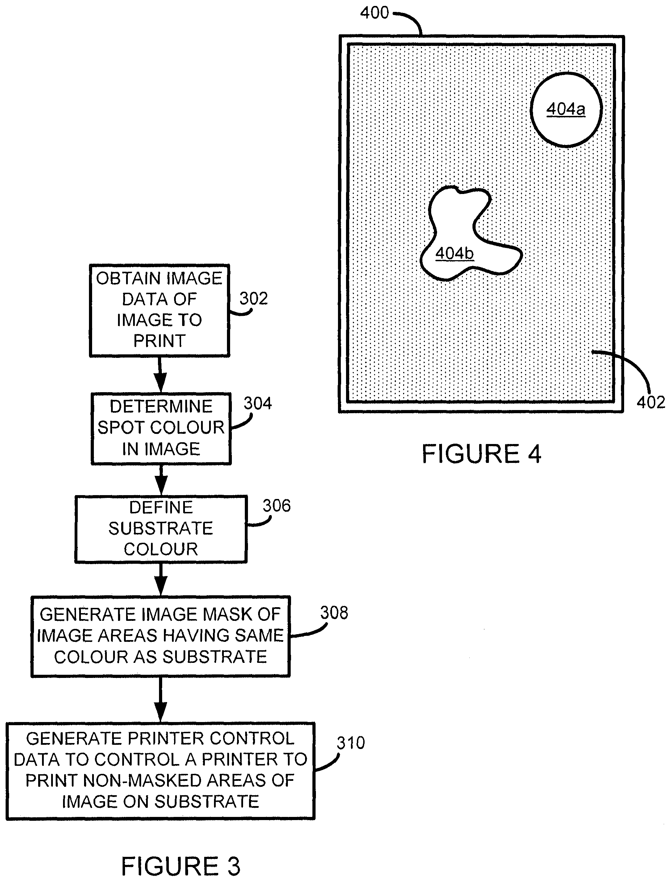

Figure 3 is a flow diagram outlining example processing steps performed by the image processor 200 according to one example.

At block 302 the image processor 200 obtains image data representing an image to print, such as the image 100. The image data may, for example, be stored in an image file of an appropriate format. The image data may define one or more areas of the image that are to be printed in a specific spot colour.

At block 304 the image processor 200 analyses the image data and determines a spot colour defined in the image data. At block 306 the image processor 200 defines the substrate colour on which the obtained image is to be printed as the determined spot colour. In the present examples the spot colour and determined substrate colour are non-white colours.

In the present example the image data defines only a single spot colour. However, in examples where the image data defines multiple spot colours the image processor 200 may request a user to select, for example through an appropriate user interface (not shown), which of the spot colours defined in the image data are to be used as the substrate colour and for generating the image mask.

At block 308 the image processor 200 generates an image mask corresponding to areas of the image 100 having the determined substrate colour.

At block 310 the image processor 200 generates printer control data to control a printer to print non-masked areas of the image 100 on a substrate.

The generated printer control data may be control data in any suitable format In one example the generated printer control data is halftone data resulting from performing halftoning on the image data. In another example the generated printer control data is printhead or print engine control data that is used directly by a printing system to generate a printed image.

The result of using the generated printer control data to a control a printing system to print an image on a substrate of the determined colour is illustrated in Figure 4. In Figure 4 is shown a substrate 400 on which an image 402 has been printed. Areas 404 of the image 402 identified in the corresponding image data as being the same colour as the substrate 400 do not have any coloured ink therein. In one example, however, one or multiple transparent fluids, such as a pre or post-print treatment fluids may be deposited in areas 404.

In this way, the areas 404 are accurately reproduced by the substrate 400 having the defined spot colour.

The colour of the substrate 400, however, may influence or affect the rendering of colours printed thereon. For example, if the colour of the substrate 400 is relatively light in colour, for example a shade of white or other light colour, the effect of the substrate colour on the printed colours may be acceptable. In other situations, however, the effect of the substrate colour on the printed colours may be unacceptable, for example if the colour of the substrate 400 is relatively dark in colour compared to part of the image to be printed.

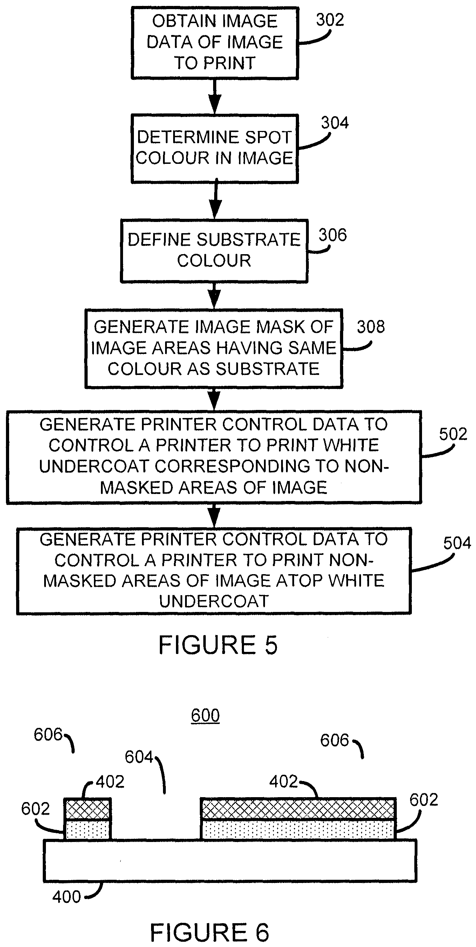

To overcome this problem, in a further example an opaque or substantially opaque undercoat layer of white ink is printed under the printed image, as will be described in further detail with reference to Figure 5.

At blocks 302 to 308 of Figure 5 the image processor 200 performs the method steps described above.

At block 502 the image processor 200 generates printer control data to control a printer to print a white undercoat corresponding to non-masked areas of the obtained image.

At block 504 the image processor 200 generates printer control data to control a printer to print non-masked areas of the obtained image on a substrate on top of the white undercoat.

As previously described, the generated printer control data may be control data in any suitable format. In one example the generated printer control data is halftone data resulting from performing halftoning on the image data. In another example the generated printer control data is printhead or print engine control data that is used directly by a printing system to generate a printed image.

Figure 6 shows a cross section of a printed image 600 printed using the printer control data generated at blocks 502 and 504. On a substrate 400 of a specific spot colour is printed a white undercoat layer 602 in areas corresponding to non-masked areas 606 of an image. Atop the white undercoat layer 602 is printed an image layer 402 that corresponds to non-masked areas of the image. It can be seen that in an area 604 corresponding to a masked area of an image no white undercoat layer or other image layer is printed. In this way, when viewing the printed image masked areas of the image are seen as the colour of the substrate 400.

Depending on the particular printing technique used to print the printed image 600 the whole white undercoat layer 602 may be printed before printing of the image layer 402. In another example the white undercoat layer 602 may be printed progressively and the image layer 402 printed thereon.

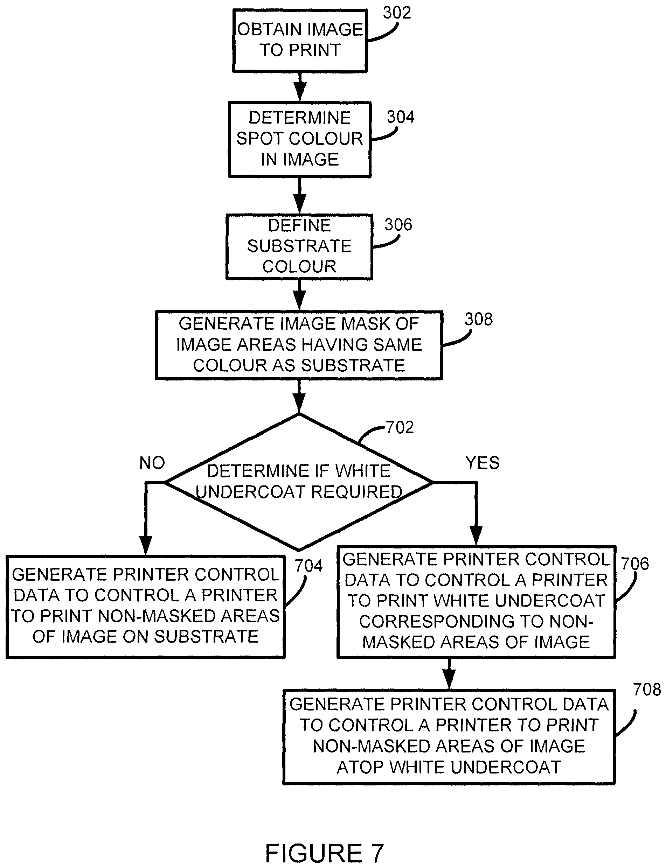

In a yet further example, as described with reference to the flow diagram of Figure 7, the processor 200 makes a determination of whether a white undercoat layer should be printed prior to printing an image layer.

At block 702 the image processor 200 determines whether an undercoat layer of white ink should be printed on the substrate prior to printing the image. This determination may be made, for example, based on colour characteristics of the substrate and of the image to be printed. For example, the substrate hue, saturation, and brightness, of the substrate and the image and may be compared to one or more threshold values. In other examples other criteria for determining whether a white undercoat layer should be printed may be used.

At block 702, if the image processor 200 determines that a white undercoat layer should notbe printed the image processor 200 generates (block 704) printer control data to control a printer to print non-masked areas of the image 100 on a substrate.

At block 702, if the image processor 200 determines that a white undercoat layer should be printed before printing the image layer, the image processor 200 generates (block 706) printer control data to control a printer to print a white undercoat layer corresponding to non-masked areas of the image 100. At block 708 the image processor 200 generates printer control data to control a printer to print non-masked areas of the image 100 atop the white undercoat layer.

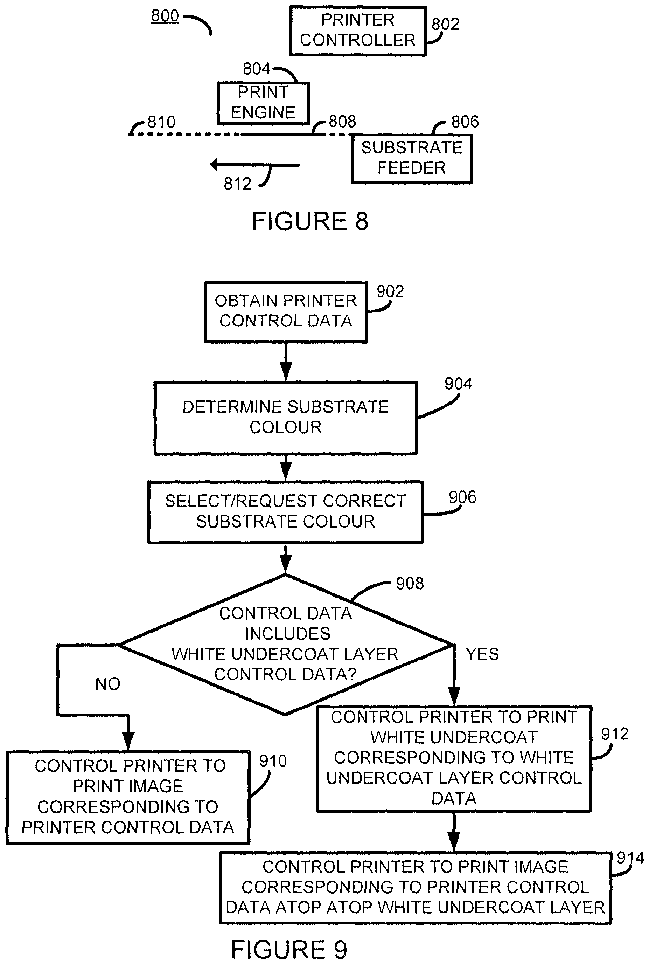

Referring now to Figure 8, there is shown a simplified block diagram of a printing system 800 according to one example. The printing system 800 comprises a print engine 804 for making ink marks on a substrate 808. The print engine 804 may be any suitable print engine such as an inkjet or an array of inkjet printheads, a laser toner print engine, a liquid electrophotographic (LEP) print engine, or the like. The print engine 804 is able to print with white ink, in addition to other coloured inks such as cyan, magenta, yellow, and black (CMYK) inks.

The substrate 808 is fed from a substrate feeder 806 along a substrate path 810 in a substrate advance direction 812. The substrate feeder 806 may include multiple substrate feeders, for example to enable the printing system 800 to selectively select a substrate from a selection of available substrates. The printing system 800 is controlled by a printing system controller 802.

An example method of operating the printing system 800, according to one example, will now be described with additional reference to the flow diagram of Figure 9.

At block 902 the printer controller 802 obtains printer control data, such as printer control data generated from the image processor 200 as described above.

At block 904 the printer controller determines from the obtained printer control data the colour of the substrate on which the image defined in the obtained printer colour data is to be printed.

In one example, at block 906 the printer controller 802 selects the correct colour substrate from the substrate feeder 806. In a further example, at block 906, the printer controller 802 requests, for example via a suitable printing system user interface (not shown), a printing system operator to load a substrate of the correct colour.

At block 908 the printer controller 802 determines whether the obtained printer control data includes printer control data for printing a white undercoat layer.

If the printer controller 802 determines that the obtained printer control data does not include printer control data for printing a white undercoat layer the printer controller 802 controls (block 910) the printer 800 to print the image defined in the obtained printer control data.

If the printer controller 802 determines that the obtained printer control data does include printer control data for printing a white undercoat layer the printer controller 802 controls (block 912) the printer 800 to print the white undercoat layer on the substrate. At block 914 the printer controller 802 controls the printer 800 to print the image in the obtained printer control data atop the printer white undercoat layer.

It will be appreciated that examples and embodiments of the present invention can be realized in the form of hardware, software or a combination of hardware and software. As described above, any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are examples of machine-readable storage that are suitable for storing a program or programs that, when executed, implement examples of the present invention. Examples of the present invention may be conveyed electronically via any medium such as a communication signal carried over a wired or wireless connection and examples suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

## Claims

1. A method of processing an image to be printed, comprising:
obtaining image data for an image to be printed;
determining from the image data a specific spot colour other than white, which is defined in the image data;
defining a substrate colour on which the image is to be printed as the determined spot colour;
generating, from the image data, an image mask corresponding to areas of the image having the specific spot colour; and
generating printer control data to control a printer to print non-masked areas of the image on a substrate having the specific spot colour and not to print masked areas of the image with any coloured ink,
wherein the step of generating printer control data further comprises:
generating printer control data to control a printer to print a white ink layer on the substrate corresponding to non-masked areas of the image; and
generating printer control data to control a printer to print non-masked areas of the image atop the printed white ink layer.

2. The method of claim 1, further comprising, determining whether the white ink layer should be printed based on colour characteristics of the substrate and of the image to be printed and, if it is determined that the white ink layer is not to be printed, generating printer control data to control the printer to print non-masked areas of image on the substrate.

3. The method of claim 1, wherein the step of determining the specific spot colour from the image data further comprises identifying a plurality of spot colours from the image data, the method further comprising obtaining a user input to determine which of the identified spot colours is to be used to generate the image mask.

4. The method of claim 1, wherein the spot colours are colours from the Pantone Matching System set of colours.

5. The method of claim 1, wherein the step of generating printer control data generates printer control data for a printer having printable colour gamut, and wherein the specific spot colour is outside of the printer's colour gamut.

6. An image processor comprising:
a processor in communication with a memory on which are stored processor executable instructions that when executed by the processor perform the steps of:
obtaining image data for an image to be printed;
determining from the image data a specific spot colour other than white, which is defined in the image data;
defining a substrate colour on which the image is to be printed as the determined spot colour;
generating, from the image data, an image mask corresponding to areas of the image having the specific spot colour;
generating printer control data to control a printer to print a white ink layer corresponding to non-masked areas of the image on a substrate having the specific spot colour and not to print masked areas of the image with any coloured ink; and
generating printer control data to control a printer to print non-masked areas of the image atop the printed white ink layer.

## Patentansprüche

1. Verfahren zum Verarbeiten eines zu druckenden Bildes, das Folgendes umfasst:
Erhalten von Bilddaten für ein zu druckendes Bild;
Bestimmen einer bestimmten, von Weiß verschiedenen Volltonfarbe aus den Bilddaten, die in den Bilddaten definiert ist;
Definieren einer Substratfarbe, auf die das Bild gedruckt werden soll, als die bestimmte Volltonfarbe;
Erzeugen einer Bildmaske aus den Bilddaten, die den Bereichen des Bildes mit der spezifischen Volltonfarbe entspricht; und
Erzeugen von Druckersteuerdaten, um einen Drucker zu steuern, um nicht maskierte Bereiche des Bildes auf einem Substrat mit der spezifischen Volltonfarbe zu bedrucken und maskierte Bereiche des Bildes nicht mit einer beliebigen farbigen Tinte zu bedrucken,
wobei der Schritt des Erzeugens von Druckersteuerdaten ferner Folgendes umfasst:
Erzeugen von Druckersteuerdaten, um einen Drucker zu steuern, um eine weiße Tintenschicht auf das Substrat zu drucken, die den nicht maskierten Bereichen des Bildes entspricht; und
Erzeugen von Druckersteuerdaten, um einen Drucker zu steuern, um nicht maskierte Bereiche des Bildes auf der gedruckten weißen Tintenschicht zu bedrucken.

2. Verfahren nach Anspruch 1, das ferner das Bestimmen, ob die weiße Tintenschicht gedruckt werden soll, basierend auf den Farbeigenschaften des Substrats und des zu druckenden Bildes und, wenn bestimmt wird, dass die weiße Tintenschicht nicht gedruckt werden soll, das Erzeugen von Druckersteuerdaten umfasst, um den Drucker zu steuern, um nicht maskierte Bildbereiche auf dem Substrat zu bedrucken.

3. Verfahren nach Anspruch 1, wobei der Schritt des Bestimmens der spezifischen Volltonfarbe aus den Bilddaten ferner das Identifizieren mehrerer Volltonfarben aus den Bilddaten umfasst, wobei das Verfahren ferner das Erhalten einer Benutzereingabe umfasst, um zu bestimmen, welche der identifizierten Volltonfarben zum Erzeugen der Bildmaske verwendet werden soll.

4. Verfahren nach Anspruch 1, wobei die Volltonfarben Farben aus dem Farbsatz des Pantone-Matching-Systems sind.

5. Verfahren nach Anspruch 1, wobei der Schritt des Erzeugens von Druckersteuerdaten Druckersteuerdaten für einen Drucker mit einer druckbaren Farbpalette erzeugt, und wobei die spezifische Volltonfarbe außerhalb der Farbpalette des Druckers liegt.

6. Bildprozessor, der Folgendes umfasst:
einen Prozessor in Kommunikation mit einem Speicher, auf dem prozessorausführbare Anweisungen gespeichert sind, die, wenn sie durch den Prozessor ausgeführt werden, die folgenden Schritte durchführen:
Erhalten von Bilddaten für ein zu druckendes Bild;
Bestimmen einer bestimmten, von Weiß verschiedenen Volltonfarbe aus den Bilddaten, die in den Bilddaten definiert ist;
Definieren einer Substratfarbe, auf die das Bild gedruckt werden soll, als die bestimmte Volltonfarbe;
Erzeugen einer Bildmaske aus den Bilddaten, die den Bereichen des Bildes mit der spezifischen Volltonfarbe entspricht;
Erzeugen von Druckersteuerdaten, um einen Drucker zu steuern, um eine weiße Tintenschicht, die nicht maskierten Bereichen des Bildes entspricht, auf ein Substrat mit der spezifischen Volltonfarbe zu drucken und maskierte Bereiche des Bildes nicht mit einer beliebigen farbigen Tinte zu bedrucken; und
Erzeugen von Druckersteuerdaten, um einen Drucker zu steuern, um nicht maskierte Bereiche des Bildes auf der gedruckten weißen Tintenschicht zu bedrucken.

## Revendications

1. Un procédé de traitement d'une image à imprimer, comprenant :
l'obtention des données d'image pour une image à imprimer ;
la détermination, à partir des données d'image, d'une couleur d'accompagnement spécifique autre que le blanc, qui est définie dans les données d'image ;
la définition d'une couleur de support sur laquelle l'image doit être imprimée en tant que couleur d'accompagnement déterminée ;
la génération, à partir des données d'image, d'un masque d'image correspondant aux zones de l'image ayant la couleur d'accompagnement spécifique ; et
la génération des données de commande d'imprimante pour commander à une imprimante d'imprimer des zones non masquées de l'image sur un support ayant la couleur d'accompagnement spécifique et à ne pas imprimer des zones masquées de l'image avec une encre colorée quelconque, dans lequel l'étape de génération de données de commande d'imprimante comprend en outre :
la génération des données de commande d'imprimante pour commander à une imprimante d'imprimer une couche d'encre blanche sur le support correspondant à des zones non masquées de l'image ; et
la génération des données de commande d'imprimante pour commander à une imprimante d'imprimer des zones non masquées de l'image sur la couche d'encre blanche imprimée.

2. Procédé selon la revendication 1, consistant en outre à déterminer si la couche d'encre blanche devrait être imprimée sur la base des caractéristiques de couleur du support et de l'image à imprimer et, s'il est déterminé que la couche d'encre blanche ne doit pas être imprimée, générer des données de commande d'imprimante pour commander à l'imprimante d'imprimer des zones non masquées d'image sur le support.

3. Procédé selon la revendication 1, dans lequel l'étape de détermination de la couleur d'accompagnement spécifique à partir des données d'image comprend en outre l'identification d'une pluralité de couleurs d'accompagnement à partir des données d'image, le procédé comprenant en outre l'obtention d'une entrée utilisateur pour déterminer laquelle des couleurs d'accompagnement identifiées doit être utilisée pour générer le masque d'image.

4. Procédé selon la revendication 1, dans lequel les couleurs d'accompagnement sont des couleurs de l'ensemble de couleurs du nuancier Pantone.

5. Procédé selon la revendication 1, dans lequel l'étape de génération de données de commande d'imprimante génère des données de commande d'imprimante pour une imprimante ayant un gamut de couleurs imprimable, et dans lequel la couleur d'accompagnement spécifique se situe en dehors du gamut de couleurs de l'imprimante.

6. Un processeur d'image comprenant :
un processeur en communication avec une mémoire sur laquelle sont stockées des instructions exécutables de processeur qui, lorsqu'elles sont exécutées par le processeur, exécutent les étapes suivantes :
l'obtention des données d'image pour une image à imprimer ;
la détermination, à partir des données d'image, d'une couleur d'accompagnement spécifique autre que le blanc, qui est définie dans les données d'image ;
la définition d'une couleur de support sur laquelle l'image doit être imprimée en tant que couleur d'accompagnement déterminée ;
la génération, à partir des données d'image, d'un masque d'image correspondant aux zones de l'image ayant la couleur d'accompagnement spécifique ;
la génération des données de commande d'imprimante pour commander à une imprimante d'imprimer une couche d'encre blanche correspondant à des zones non masquées de l'image sur un support ayant la couleur d'accompagnement spécifique et à ne pas imprimer des zones masquées de l'image avec une encre colorée ; et
la génération des données de commande d'imprimante pour commander à une imprimante d'imprimer des zones non masquées de l'image sur la couche d'encre blanche imprimée.
